(19) **Europäisches Patentamt**
**European Patent Office**
**Office européen des brevets**

(11) **EP 2 406 929 B1**

(12) **FASCICULE DE BREVET EUROPEEN**

(45) Date de publication et mention
de la délivrance du brevet:
**08.07.2015 Bulletin 2015/28**

(21) Numéro de dépôt: **10707019.5**

(22) Date de dépôt: **04.03.2010**

(51) Int Cl.:
**H04L 29/06** *(2006.01)*    **H04L 29/14** *(2006.01)*

(86) Numéro de dépôt international:
**PCT/EP2010/052768**

(87) Numéro de publication internationale:
**WO 2010/102944 (16.09.2010 Gazette 2010/37)**

(54) **PROCEDE ET DISPOSITIF DE TRANSMISSION ROBUSTE DE FLUX DE PAQUETS DE DONNEES A EN-TETES COMPRESSES SANS AUGMENTATION DE DEBIT**

VERFAHREN UND VORRICHTUNG ZUR ZUVERLÄSSIGEN ÜBERTRAGUNG VON DATENPAKETFLÜSSEN MIT KOMPRIMIERTEN HEADERN OHNE ERHÖHUNG DER FLUSSRATE

METHOD AND DEVICE FOR THE RELIABLE TRANSMISSION OF DATA PACKET FLOWS WITH COMPRESSED HEADERS WITHOUT INCREASING THE FLOW RATE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **13.03.2009 FR 0901186**

(43) Date de publication de la demande:
**18.01.2012 Bulletin 2012/03**

(60) Demande divisionnaire:
**13151423.4 / 2 605 475**

(73) Titulaire: **Thales**
**92200 Neuilly Sur Seine (FR)**

(72) Inventeurs:
• **BAUDOIN, Cédric**
  **F-31400 Toulouse (FR)**
• **ARNAL, Fabrice**
  **F-31000 Toulouse (FR)**
• **LACAN, Jérôme**
  **F-31400 Toulouse (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**JP-A- 2004 282 197**

• **DATABASE WPI Week 200468 Thomson Scientific, London, GB; AN 2004-696130 XP002564400 -& JP 2004 282197 A (NEC CORP) 7 octobre 2004 (2004-10-07)**
• **LIEBL G ET AL: "Enhanced packet-based transmission of multi-rate signals over GERAN" PERSONAL, INDOOR AND MOBILE RADIO COMMUNICATIONS, 2004. PIMRC 2004. 15 TH IEEE INTERNATIONAL SYMPOSIUM ON BARCELONA, SPAIN 5-8 SEPT. 2004, PISCATAWAY, NJ, USA,IEEE, PISCATAWAY, NJ, USA, vol. 3, 5 septembre 2004 (2004-09-05), pages 1812-1816, XP010754253 ISBN: 978-0-7803-8523-8**
• **QUALCOMM EUROPE S A R L: "Selection of application data packet sizes for MBMS" 3GPP DRAFT; R2-051932, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. London, UK; 20050824, 24 août 2005 (2005-08-24), XP050129084**

**EP 2 406 929 B1**

**Description**

La présente invention a pour objet un procédé et un dispositif d'amélioration de la robustesse de flux de paquets à en-têtes compressés par insertion de redondance sans augmentation du débit et/ou de la bande passante.

Le champ d'application de l'invention est notamment celui des réseaux de communication utilisant le protocole internet IP (Internet Protocol) mettant en oeuvre des techniques de compression d'en-têtes réseau sur les paquets transmis afin d'optimiser la bande passante en supprimant les informations redondantes au sein d'un en-tête réseau et/ou entre plusieurs en-têtes réseau successifs.

Les techniques de compression d'en-têtes sont mises en oeuvre sur des flux de données, par exemple des données multimédia, transmises sous forme de paquets à travers un empilement de couches protocolaires caractéristiques d'un réseau de communication IP. On peut citer, notamment, la couche réseau mettant en oeuvre, par exemple, le protocole internet IP , la couche transport mettant en oeuvre, par exemple, le protocole de datagramme utilisateur plus connu sous l'acronyme anglo-saxon UDP (User Datagram Protocol) ou le protocole de communication temps-réel RTP (Real Time Transport Protocol). Toutes ces couches protocolaires ont notamment pour effet d'ajouter un en-tête protocolaire, contenant une série de champs d'information, aux paquets de données initialement transmis. Les paquets résultants de cet empilement obtenus au niveau de la couche réseau voient alors leur taille considérablement augmentée par rapport à la taille du paquet de données initial.

Un réseau de communication IP comprend également un réseau d'accès qui peut être un réseau d'accès radio capable de transmettre les paquets de la couche réseau vers le medium physique de communication qui, notamment dans le cas d'une transmission sans fil, peut présenter une bande passante contrainte. Dans ce contexte où les ressources disponibles sur le medium de transmission sont réduites, il est connu d'utiliser des schémas de compression d'en-têtes réseau afin de diminuer la taille des paquets à transmettre sans affecter les données utiles.

Une des techniques de compression d'en-tête connue de l'Homme du métier est décrite par le standard ROHC (Robust Header Compression) normalisé par le comité IETF à travers les RFC 3095 et afférentes. Cette technique définit une pluralité de paquets compressés à des niveaux différents ainsi qu'un ensemble d'algorithmes permettant d'une part la compression des champs contenus dans les en-têtes réseau et d'autre part le séquencement des transitions entre les différents états de compression disponibles. De façon générale, la technique de compression ROHC, comme l'ensemble des techniques connues de compression d'en-tête, s'appuie sur l'échange d'un contexte initial entre le compresseur situé du coté de la source d'émission des paquets et le décompresseur situé du coté du destinataire qui reçoit ces mêmes paquets. Dans un second temps, seuls les champs des en-têtes variables sont transmis après avoir été codés de façon différentielle afin d'améliorer la performance de la compression.

De façon générale, l'invention s'applique à tout dispositif devant émettre des flux de données IP vers un médium de transmission à bande passante contrainte et ce via une couche d'accès délivrant des cellules de taille fixe encapsulant lesdites données IP.

Un des problèmes principaux des mécanismes de compression d'entêtes introduits précédemment réside dans le fait que la transmission des paquets peut être entachée d'erreurs dues notamment aux phénomènes de propagation intervenant sur le canal physique. Ces erreurs peuvent entraîner la perte de paquets et, dans le cas de paquets à en-têtes compressés, engendrer une désynchronisation entre les entités de compression et de décompression. Cette désynchronisation conduit, généralement, à perdre l'ensemble des paquets suivants jusqu'à une réinitialisation du contexte du décompresseur. Les pertes de paquets peuvent également être liées à un phénomène de congestion conduisant à une saturation des mémoires tampons (connues également sous le terme anglo-saxon « buffers ») de la couche d'accès au médium de transmission. Ce phénomène a de plus pour caractéristique de provoquer des pertes de paquets en rafale très pénalisantes pour maintenir la synchronisation des entités de compression et de décompression.

Le problème se pose alors d'améliorer la robustesse de ces schémas de compression afin de limiter les pertes de paquets sans diminuer les performances globales de la compression et sans augmenter le débit de transmission des données.

Les techniques connues de compression d'entête, comme le standard ROHC, prennent en compte la problématique de robustesse aux erreurs de transmission par le biais d'algorithmes de codage des champs variables, par exemple l'algorithme à fenêtre glissante W-LSB (Weighted Least Significant Bit) permettant au décompresseur de s'affranchir d'un certain nombre d'erreurs consécutives. L'augmentation du niveau de robustesse de ce mécanisme s'accompagne directement d'une réduction du niveau de compression. Néanmoins, ces algorithmes ne permettent pas dans tous les cas de maintenir la synchronisation entre le compresseur et le décompresseur et sont source d'une complexité de mise en oeuvre importante. Enfin, elles ne prennent pas en compte les contraintes des couches inférieures à la couche réseau, notamment la couche d'accès.

En effet, dans un réseau de communication, la couche d'accès, et notamment la couche d'accès radio, impose parfois une transmission de données sous forme de cellules, par exemple des cellules de type ATM (« Asynchronous Transfer Mode »), ayant une taille fixe donnée. Ces cellules sont obtenues par concaténation et/ou segmentation des paquets réseau à en-tête compressé ce qui a pour effet d'engendrer l'utilisation de bits dits de bourrage ou « padding » en anglais. Ces bits de bourrage ne contiennent aucune information utile et sont insérés dans l'unique but de respecter la taille fixée a priori des cellules.

La demande de brevet français FR 2907624 propose une méthode de compression d'en-tête qui prend en compte la taille des cellules de la couche d'accès afin d'en minimiser le nombre, cependant cette méthode a pour inconvénients d'être d'une part non compatible avec les standards de compression d'en-tête couramment utilisés dans de nombreuses infrastructures de réseau de communication, en particulier le standard ROHC, et d'autre part d'être moins performante en termes de gain de compression que les standards issus des travaux de l'IETF tels que ROHC.

La demande de brevet japonaise JP 2004 282197 propose une méthode permettant d'exploiter des sections de bourrage au sein de paquets fragmentés pour y insérer des données de redondance mais ne traite pas de la problématique précise de la robustesse aux erreurs des entêtes compressés. L'invention est définie dans les revendications indépendantes 1 et 9.

La présente invention propose notamment d'exploiter les bits utilisés habituellement pour servir de bourrage présents dans les cellules générées au niveau de la couche d'accès afin de les remplacer par une information redondante permettant d'améliorer significativement la robustesse des entêtes réseau compressés et ce sans dégrader les performances globales en terme de gain de compression.

A cet effet l'invention a pour objet un procédé de transmission robuste d'un flux de données selon la revendication 1.

Dans une variante de réalisation de l'invention le rendement dudit code correcteur est donné par le rapport $\dfrac{k}{k + r_j}$ où k est la longueur du bloc de données à encoder qui est composé de la concaténation des entêtes compressés des paquets présents entre ladite section de bourrage et la

section de bourrage immédiatement précédente au sein dudit flux de données transmis.

Dans une variante de réalisation de l'invention le rendement dudit code correcteur est inférieur à un rendement maximum $\dfrac{k_{max}}{k_{max} + r_j}$ déterminé à partir d'une estimation du taux de paquets perdus au cours de la transmission et de la courbe de performance dudit code, la longueur k dudit bloc de données à encoder étant limitée à une valeur $k_{max}$ obtenue à partir dudit rendement maximum et de la longueur $r_j$ de ladite section de bourrage.

Dans une variante de réalisation de l'invention le rendement dudit code correcteur est fixé à une valeur constante $R_c$ et la dimension k dudit bloc de données utiles à encoder est obtenue par la relation $k = r_j \dfrac{R_c}{1 - R_c}$ , ledit bloc de données utiles comprenant tout ou partie de l'ensemble des en-têtes compressés $H_i$ des paquets $P_i$ présents dans ledit flux de paquets à transmettre avant ladite section de bourrage.

Dans une variante de réalisation de l'invention ladite première étape de compression d'en-tête met en oeuvre un encodage des champs dudit en-tête utilisant une fenêtre glissante de taille w et ledit bloc de données utiles comprend tout ou partie d'un sous-ensemble S de l'ensemble des en-têtes compressés $H_i$ des paquets $P_i$ présents avant ladite section de bourrage, ledit sous-ensemble S étant caractérisé par le fait que deux en-têtes consécutifs du sous-ensemble S sont séparés dans ledit flux de données à transmettre par au moins un nombre d'en-têtes égal à la longueur w de la fenêtre glissante du protocole de mise en oeuvre de l'étape de compression d'en-tête.

Dans une variante de réalisation de l'invention ledit code correcteur est un code de Reed-Solomon systématique ou un code BCH ou un code de Reed-Muller, ledit code étant éventuellement raccourci et/ou poinçonné.

Dans une variante de réalisation de l'invention le protocole ROHC ou le protocole IPHC est utilisé pour la compression d'en-tête.

Dans une variante de réalisation de l'invention le protocole ATM ou le protocole MPEG-TS est utilisé pour ladite fragmentation des paquets à entête compressé.

L'invention a également pour objet un système de transmission robuste d'un flux de données de paquets à en-têtes compressés comportant un émetteur et un récepteur, caractérisé en ce que ledit émetteur comporte des moyens pour exécuter les étapes du procédé décrit précédemment.

D'autres caractéristiques et avantages de la présente invention apparaîtront mieux à la lecture de la description qui suit en relation aux dessins annexés qui représentent :

La figure 1, une illustration du phénomène de désynchronisation due à une perte de paquets successifs au sein d'un flux de paquets à en-têtes compressés,

La figure 2, un schéma du positionnement de l'invention au sein des différentes couches protocolaires mises en oeuvre dans le cadre d'une transmission de paquets à en-têtes IP compressés,

La figure 3 une illustration d'un mécanisme de fragmentation prévu par la couche d'accès pour une unité de données protocolaire comprenant une section de bourrage,

La figure 5, un schéma représentant l'encapsulation de paquets $P_i$ comportant chacun un entête $H_i$ entraînant l'apparition de sections de bourrage $R_i$,

La figure 6, un schéma représentant le remplacement des sections de bourrage $R_i$ par des blocs de redondance générés à partir du procédé selon l'invention,

La figure 7, une variante de réalisation de l'invention pour laquelle le rendement du code correcteur est constant,

La figure 8, une variante de réalisation de l'invention pour laquelle le schéma de codage utilise certaines propriétés du mécanisme de compression d'en-tête.

Afin de mieux faire comprendre le procédé selon l'invention la description qui suit est donnée dans le cadre d'une application de transmission de paquets à en-têtes IP compressés mettant en oeuvre, par exemple le protocole ROHC, au travers d'une couche d'accès radio respectant le protocole de segmentation/réassemblage AAL5 (ATM Adaptation Layer 5) des cellules ATM. Ce cadre est utilisé à titre illustratif et nullement limitatif étant entendu que le procédé selon l'invention peut s'appliquer à tout type de mécanisme de compression d'entêtes ainsi qu'à toute méthode d'accès radio utilisant un mécanisme de segmentation/réassemblage des paquets à en-têtes compressés afin de produire des cellules de données de taille fixée a priori, induisant implicitement la présence de bits de bourrage au sein desdites cellules. En particulier, le cas d'utilisation du standard MPEG-TS (Moving Picture Expert Group - Transport Stream) est également compatible de la présente invention. En effet, ce dernier définit, notamment, l'encapsulation de données multimédia dans des paquets destinés au transport à travers un réseau de communication à protocole internet. On peut citer enfin le cas du standard DVB-S2 (Digital Video Broadcasting Satellite-Second Generation) qui est compatible de la présente invention au titre de l'encapsulation de paquets à en-tête compressés dans des trames de couche physique standardisées sous l'appellation « BBFrames ».

De plus, d'autres méthodes de compression d'en-tête existent auxquelles l'invention peut également s'appliquer, en particulier le protocole IPHC (IP Header Compression over PPP) normalisé via le RFC 2509 par le comité de standardisation IETF. La suite de la description est effectuée en prenant l'exemple du protocole ROHC étant entendu que tout autre mécanisme de compression d'en-tête est également compatible de l'invention.

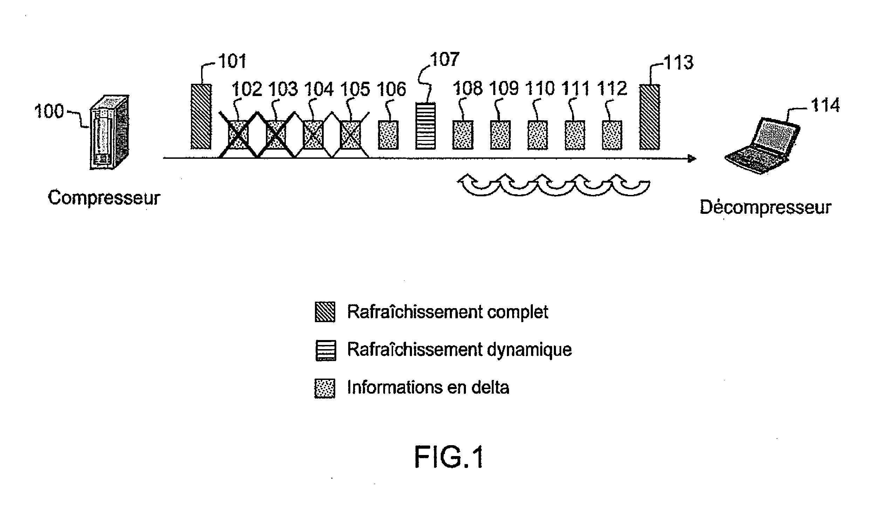

La figure 1, illustre un scénario de transmission de paquets à en-têtes compressés selon l'art antérieur soumis à des erreurs et son influence sur la robustesse globale de la méthode de compression d'en-tête.

Un terminal 100 dans lequel est mis en oeuvre un mécanisme de compression d'en-tête connu, par exemple un mécanisme conforme au standard ROHC, transmet un flux de paquets dont les en-têtes 101-113 varient en taille en fonction du niveau de compression qui leur est appliqué. L'en-tête 101 correspond à un rafraîchissement complet du contexte permettant au compresseur 100 et au décompresseur 114 de rester synchronisés. Les en-têtes 102,103,104,105,106 sont ensuite transmis avec un niveau de compression plus élevé que celui utilisé pour compresser l'entête de rafraichissement 101 en codant les champs d'information de façon différentielle par rapport au paquet précédent. Si une erreur, due par exemple à la non fiabilité du lien de transmission ou à des phénomènes de congestion de paquets, apparaît sur l'en-tête 102, le contexte du décompresseur 114 n'est plus à jour et une désynchronisation apparaît entraînant potentiellement la perte de tous les paquets à en-tête compressé suivants 103,104,105,106 jusqu'à réception d'un paquet comportant une entête de rafraîchissement dynamique 107 qui permet de remettre à jour le contexte du décompresseur 114. Les paquets suivants 108,109,110,111,112 peuvent alors être à nouveau compressés avec un niveau de compression plus important que celui utilisé pour compresser l'en-tête 107.

L'illustration précédente amène au constat que le respect des performances en gain de compression des mécanismes existant de compression d'en-tête réseau entraîne une sensibilité importante aux erreurs pouvant entraîner des pertes de paquets conséquentes au sein d'un flux de données transmis auquel sont appliqués lesdits mécanismes.

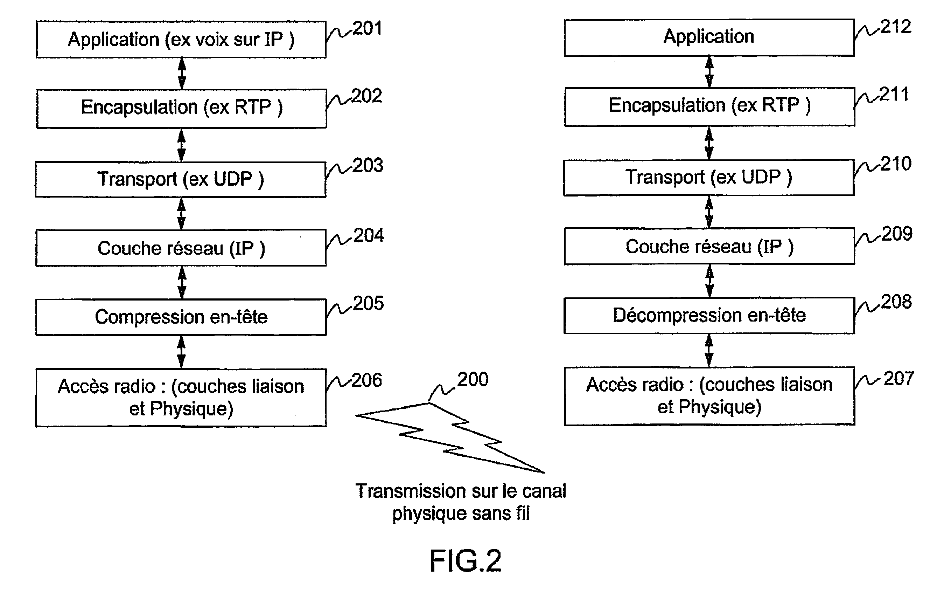

La figure 2 schématise les différentes étapes de l'empilement protocolaire que subit un paquet de données généré par une couche d'application 201 mettant en oeuvre, par exemple, une application multimédia de voix sur IP ou de diffusion de contenu vidéo. Les paquets de données générés par la couche d'application 201 sont ensuite transmis aux couches inférieures d'encapsulation 202, de transport 203 et réseau 204 qui tour à tour rajoutent un en-tête protocolaire spécifique audit paquet de données. Les protocoles mis en oeuvre au sein des couches 202,203 et 204 sont, par exemple, les protocoles respectifs RTP, UDP et IP. Un mécanisme de compression d'en-tête standard comportant une étape d'amélioration de la robustesse selon l'invention est mis en oeuvre au sein de la couche de compression d'entête 205. Le procédé selon l'invention utilise certaines informations provenant de la couche d'accès radio 206, en particulier la taille d'une cellule ATM afin de mettre en oeuvre l'optimisation de la compression au sein de la couche 205. Les paquets sont ensuite transmis via un canal physique de transmission sans fil 200 vers un récepteur distant (coté droit de la figure 2). Ce récepteur reçoit les données au niveau de sa couche accès radio 207 puis les transmet à une étape de décompression d'en-tête selon l'invention 208. Les données obtenues avec en-têtes décompressés sont ensuite transmises vers la couche réseau IP 209 puis vers la couche transport 210 avant d'être désencapsulées 211 puis transmises à l'application destinataire 212.

L'invention se situe donc au niveau des couches 205,208 réalisant le mécanisme de compression et décompression d'en-tête. Elle nécessite des informations provenant de la couche d'accès radio 206,207, notamment la taille des cellules ATM.

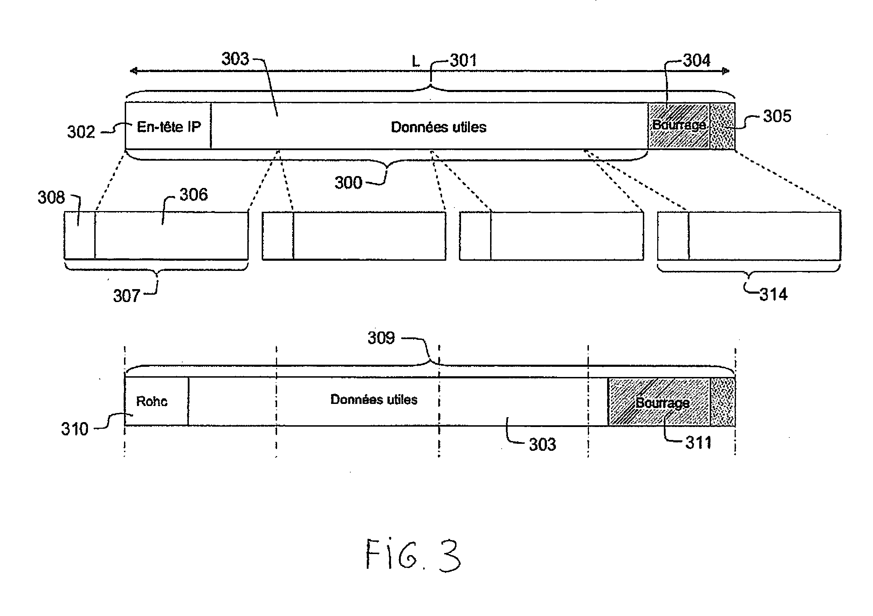

La figure 3 illustre l'application du procédé selon l'invention dans le cas d'un paquet 300 composé d'un en-tête réseau 302 et d'une section de données utiles 303, par exemple un paquet IP, encapsulé dans une unité de données protocolaires 301, ou PDU (« Protocol Data Unit ») de la couche d'accès dont la taille L est un multiple de la taille de la section utile d'une cellule ATM 306. Ladite unité de données protocolaires 301 comporte une section de bourrage 304 utilisée pour compléter le paquet afin d'obtenir la taille fixée par l'application, ainsi qu'éventuellement un suffixe 305. Une cellule ATM 307 comprend un en-tête 308 et une section utile 306 générée en fragmentant l'unité de données protocolaires 301 en un nombre de sections égal au rapport entre la taille L de l'unité de données protocolaires 301 et la taille fixée a priori de la section utile 306 d'une cellule ATM 307. Dans l'exemple illustré à la figure 3, le nombre de cellules ATM obtenues après fragmentation est de quatre. Un mécanisme de compression d'en-tête selon l'art antérieur permet d'obtenir, à partir de l'en-tête réseau 302, un entête compressé 310 avec un niveau de compression maximal. L'unité de données protocolaires 309 obtenue par encapsulation du paquet compressé contenant l'en-tête compressé 310 et la section utile 303 présente une section de bourrage 311 importante. Les tailles respectives des unités de données protocolaires 301 et 309 étant les mêmes, le schéma de compression utilisé ne présente pas, in fine, un gain de compression important puisqu'il engendre la génération du même nombre de cellules ATM que dans le cas d'un en-tête réseau non compressé 302. De plus, le fait d'utiliser un en-tête fortement compressé est susceptible de dégrader la performance en termes de pertes paquets comme illustré précédemment à l'appui de la figure 1.

Selon une réalisation de l'invention, les bits de bourrage sont remplacés, par des données redondantes générées à partir d'un code correcteur appliqué à tout ou partie d'un ou plusieurs en-têtes compressé. Le but recherché est de renforcer la robustesse aux erreurs du flux de paquets compressés sans augmenter le débit.

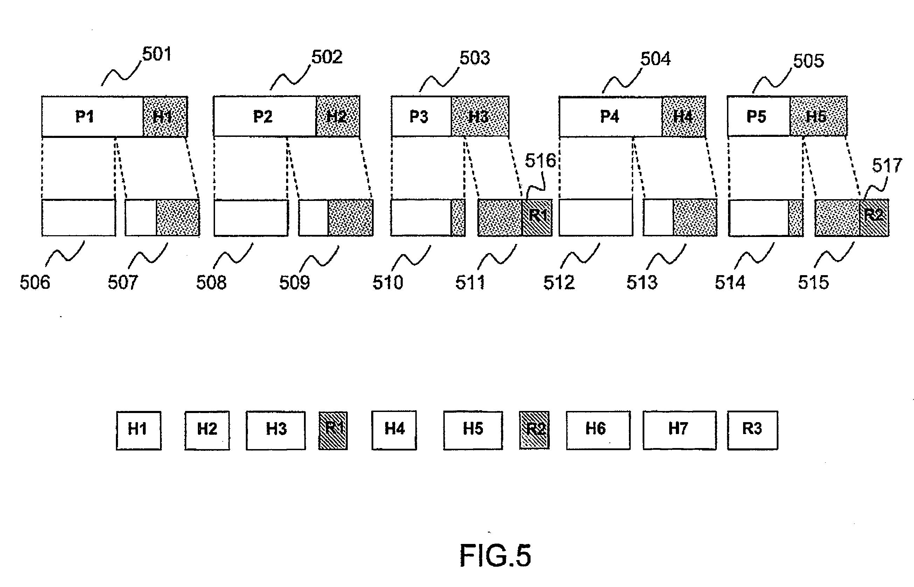

La figure 5 représente un flux de paquets à en-têtes compressés 501,502,503,504,505 comprenant une partie de données utiles notée $P_i$ et un en-tête compressé noté $H_i$. Lesdits paquets sont fragmentés afin d'être encapsulés dans des cellules de taille fixe 506-515, générant des sections de bourrage 516,517 à l'intérieur de certaines de ces cellules. La présence ou non de bourrage dans une cellule est le résultat direct du processus de fragmentation. Ces sections sont présentes dans le seul but de conserver une taille fixe pour chaque cellule alors que la taille des paquets à en-tête compressé est variable. Le procédé selon l'invention a notamment pour but de remplacer les sections de bourrage 516,517 par des sections de même taille mais comprenant des informations de redondance notées par la suite $R_j$. Cette redondance peut être obtenue en utilisant un code correcteur appliqué sur tout ou partie d'un ou plusieurs en-têtes. Sur la partie basse de la figure 5, la succession des en-têtes compressés $H_i$ et des sections de redondance $R_j$ est représentée en respectant l'ordre temporel. Les en-têtes $H_1, H_2, H_3$ positionnés avant une section de redondance $R_1$ sont ceux correspondant aux paquets compressés 501,502,503 dont la fragmentation à engendré une section de bourrage 516 de taille égale à celle de $R_1$.

Dans la suite de la description la taille d'un entête $H_i$ est notée $h_i$ et celle d'un bloc de redondance $R_j$ est notée $r_j$. Les exemples décrits prennent en compte le cas d'utilisation d'un code de Reed-Solomon comme code correcteur, mais le procédé selon l'invention peut être étendu à tout type de code correcteur en bloc dont on peut faire varier le rendement, la taille du bloc d'information et celle du bloc de redondance. En particulier les codes BCH (Bose, Ray-Chaudhuri, Hocquenghem) ou les codes de Reed-Muller sont également utilisables.

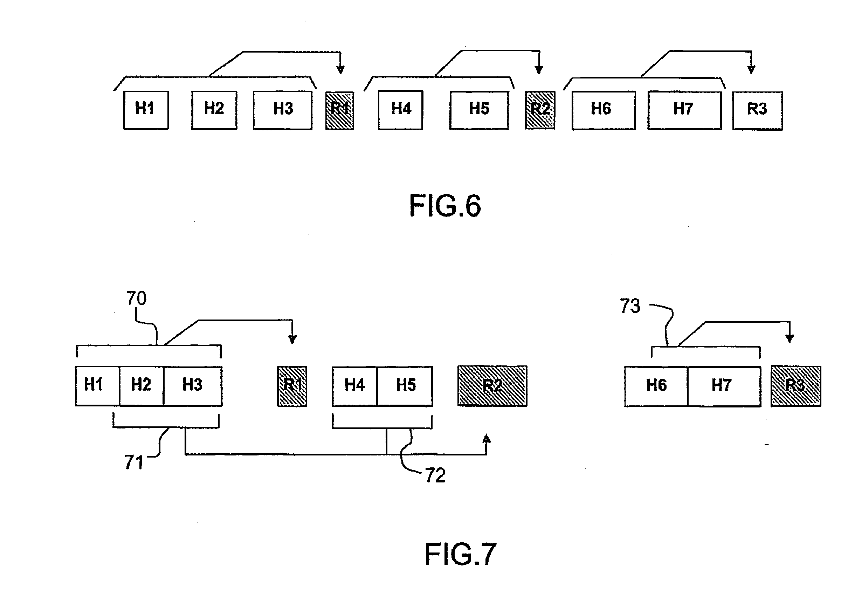

La figure 6 schématise un exemple de génération de redondance par application d'un code correcteur sur un ou plusieurs en-têtes compressés. Le système de codage selon l'invention consiste à générer un bloc de redondance $R_j$, dont la taille correspond à celle d'une zone de bourrage telle qu'explicité précédemment, à partir d'une protection appliquée sur les entêtes précédents qui n'ont pas encore été protégés. Dans l'exemple de la figure 6, le bloc de redondance $R_1$ est calculé à partir des en-têtes $H_1$, $H_2$ et $H_3$, le bloc de redondance $R_2$ est calculé à partir des en-têtes $H_4$ et $H_5$ et le bloc de redondance $R_3$ est calculé à partir des en-têtes $H_6$ et $H_7$. Une des particularités de ce schéma de codage est que la longueur de l'information à coder et la longueur du bloc de redondance généré sont variables. De façon générale, si les en-têtes $H_u,...,H_{u+s}$ sont protégés par le bloc de redondance $R_v$, la dimension k, exprimée en nombre de symboles, et la longueur r du bloc de redondance du code utilisé, par exemple un code de Reed Solomon, sont égales respectivement à :

$$k = \sum_{i=0}^{s} h_{u+i} \ \text{ et } \ r = r_v$$

La longueur r du bloc de redondance est fixée, car déterminée par la taille de la section de bourrage correspondante. Dans un premier temps, le procédé selon l'invention peut s'appliquer pour une taille k fixée, dans ce cas, le rendement *Rate* du code correcteur à utiliser pour générer le bloc de redondance $R_v$ est égal

à $Rate = \dfrac{k}{k+r}$. Dans le cas d'utilisation d'un code de Reed-Solomon, les valeurs k et r doivent respecter l'inégalité suivante :

$$k + r \leq 2^m - 1 \qquad (1)$$

où $2^m$ est la taille du corps fini utilisé par le code Reed-Solomon. Les valeurs de m utilisées en pratique sont, par exemple, 8 ou 16.

Un des buts de l'invention est notamment de rendre robuste le flux de paquets à en-têtes compressés contre des erreurs de propagation qui ont pour effet de faire perdre un paquet entier en réception. Dans un cas d'utilisation où les en-têtes $H_1$, $H_2$, $H_3$, $H_4$ et $H_5$ sont protégés par un même bloc de redondance $R_1$, si les en-têtes $H_2$ et $H_4$ sont par exemple perdus, leurs longueurs respectives $h_2$ et $h_4$ ne sont donc pas connues et un récepteur adapté à décoder le flux de paquets protégés selon l'invention ne saura pas positionner l'en-tête $H_3$ au sein du flux d'information à décoder. Le problème identifié par cet exemple peut bien entendu être généralisé à tout flux de paquets reçus au sein duquel certains ont été perdus entrainant alors une ambiguïté sur la position des en-têtes correctement reçus au sein du flux d'informations à décoder. Pour pallier à ce problème, le procédé selon l'invention fixe une contrainte supplémentaire sur le code correcteur. Dans le cas où le code de Reed-Solomon utilise un corps fini à $2^8$ symboles, on impose que la longueur k' du bloc d'information à coder respecte la relation suivante :

$$k' + r \leq 2^8 - 3 ,$$

Dans ce cas, le code correcteur appliqué de rendement $\dfrac{k}{k+r}$ , par exemple un code de Reed-Solomon systématique, sera raccourci en considérant qu'un nombre égal à k-k' de symboles d'information supplémentaires sont nuls. La marge de k-k' symboles permet au décodeur de retrouver la bonne longueur de la portion de données effacées en utilisant la capacité de détection d'erreurs dudit code. Dans l'exemple précédent, le décodeur effectue une détection d'erreurs sur chacune des positions possibles de l'entête $H_3$ et permet de valider celle qui correspond à la position réelle. De manière générale la valeur de k-k' doit être supérieure ou égale à 16 bits afin de permettre au décodeur d'effectuer une détection des erreurs dues à un mauvais positionnement d'un en-tête correctement reçu au sein du flux de données encodées.

Dans une variante de réalisation, un niveau de protection des en-têtes minimum peut être déterminé à partir d'une mesure du taux de perte des paquets observé en réception. La connaissance du taux d'erreur paquets permet de déduire, à partir par exemple de courbes théoriques de performance du ou des codes correcteurs choisis, le rendement maximum $Rate_{max}$ de ces codes correcteurs. Si le rendement $Rate$ obtenu via le procédé selon l'invention tel que décrit précédemment est supérieur au rendement maximum $Rate_{max}$, l'invention consiste alors à diminuer la longueur k' du bloc d'information à coder en limitant le nombre d'en-têtes protégés afin d'obtenir un rendement de code au plus égal à $Rate_{max}$.

La figure 7 représente une autre variante de réalisation de l'invention pour laquelle la fenêtre d'information est glissante et le taux de codage est constant. Un des buts de cette variante est d'utiliser au mieux la redondance obtenue en remplaçant les sections de bourrage disponibles.

Le principe consiste à fixer un rendement constant $Rate$ du code correcteur et à utiliser systématiquement un bloc d'information de longueur k, tel que

$$Rate = \frac{k}{k+r}$$ . Dans le cas où k dépasse la longueur totale de la somme des en-têtes immédiatement précédents du bloc de redondance $R_j$, le bloc d'information peut contenir tout ou partie d'un ou plusieurs en-têtes $H_i$ précédent le bloc de redondance $R_{j-1}$ et qui a déjà été protégé par la génération des blocs de redondance postérieurs à $R_j$. Cette solution implique un stockage des en-têtes sur un horizon plus important que pour le procédé décrit à la figure 6. Elle présente également la particularité qu'un ou plusieurs en-têtes peuvent être protégés par un ou plusieurs blocs de redondance ce qui engendre ainsi une différence de niveau de protection entre les en-têtes. Un exemple de réalisation du procédé selon l'invention est représenté sur la figure 7. La zone de bourrage $R_1$ est remplacée par un bloc de redondance de même taille généré à partir du codage correcteur du bloc d'information 70 constitué de la concaténation des en-têtes $H_1$, $H_2$ et $H_3$. La zone de bourrage $R_2$ possède une longueur $r_2$ telle que la longueur du bloc d'information à encoder pour respecter le rendement constant $Rate$ du code correcteur nécessite de concaténer, en plus des en-têtes $H_4$ et $H_5$ , une partie du bloc d'information précédemment utilisé et constitué des en-têtes $H_1$, $H_2$ et $H_3$. Le bloc d'information sur lequel est appliqué le code correcteur est constitué d'une part du bloc 72 comprenant les en-têtes $H_4$ et $H_5$ et d'autre part du bloc 71 comprenant les en-têtes $H_2$ et $H_3$ ainsi qu'une partie de l'en-tête $H_1$. Enfin le bloc de redondance $R_3$ est généré de façon similaire en calculant, à partir du rendement du code $Rate$ et de la longueur $r_3$ de la zone de bourrage disponible, la longueur du bloc d'information 73 à encoder. Dans l'exemple de la figure 7, ledit bloc est composé de la concaténation d'une partie de l'entête $H_6$ et de l'en-tête $H_7$.

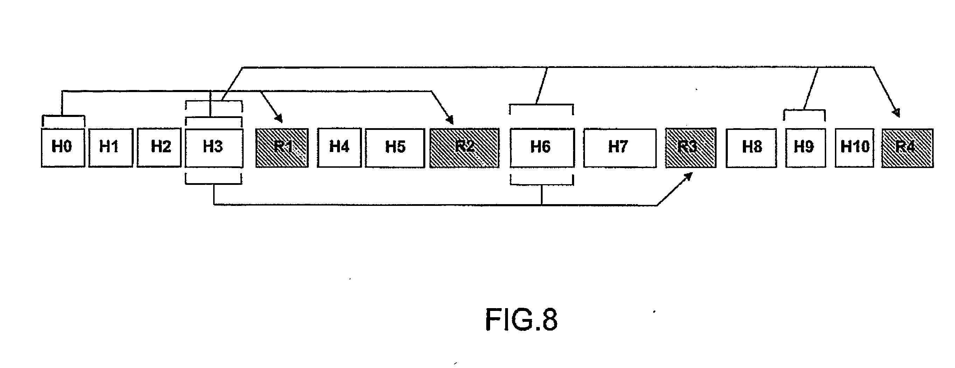

La figure 8 illustre une autre variante de l'invention pour laquelle le schéma de codage est adapté aux protocoles de compression d'en-tête utilisant une fenêtre glissante pour compresser les champs d'en-tête ayant un profil de variation prédictible. Par exemple, le protocole ROHC utilise un mécanisme de fenêtre glissante de taille w connu sous l'acronyme W-LSB qui a l'effet suivant : un en-tête $H_i$ peut être décompressé par l'entité de réception ROHC si au moins un des en-têtes précédent de l'ensemble {$H_{i-w}$, $H_{i-w+1}$,..., $H_{i-1}$} a été décompressé avec succès. Le procédé selon l'invention tel que décrit à la figure 7 s'applique alors de façon similaire mais en n'appliquant le codage correcteur que sur un sous-ensemble d'en-têtes S défini de telle sorte que deux en-têtes consécutifs ne sont pas éloignés de plus de w positions. De façon formelle, le sous-ensemble S est décrit par la relation suivante :

$$S = \left\{ H_{b(0)}, H_{b(1)}, H_{b(2)}, \cdots \right\}$$

Où b est une fonction strictement croissante faisant correspondre un entier positif à un autre entier positif et telle que la relation suivante soit vérifiée :

$$\forall i > 0, b(i) - b(i-1) \leq w$$

La fonction b peut, par exemple, être définie par b(i)=w.i ce qui donne le sous-ensemble S = {$H_0$, $H_w$, $H_{2w}$, $H_{3w}$...}.

Un des avantages de ce mode de réalisation de l'invention est qu'un niveau de protection est appliqué aux éléments du sous-ensemble S. Les entêtes protégés du sous-ensemble S sont ensuite utilisés par le décompresseur pour assurer la décompression des en-têtes non protégés et non inclus dans le sous-ensemble S. Le schéma de protection par codage est ici complémentaire du mécanisme de protection intrinsèque du protocole de compression d'en-tête. En effet, la protection d'un seul des en-têtes de l'ensemble {$H_{i-w}$, $H_{i-w+1}$,..., $H_{i-1}$} contribue à augmenter fortement la probabilité qu'il soit reçu correctement et permet ensuite au protocole de décompression d'en-tête de décompresser correctement tous les en-têtes dudit ensemble. De plus, si l'on augmente la longueur w de la fenêtre glissante du protocole de compression, le sous-ensemble S comprend moins d'éléments et nécessite la génération de moins de redondance pour assurer le même niveau de protection. Inversement, si la quantité de redondance générée par le code correcteur augmente, celui-ci est alors capable d'assurer le même niveau de protection à un plus grand nombre d'en-têtes, ce qui peut impliquer une réduction de la longueur de la fenêtre glissante du protocole de compression et donc une amélioration du taux de compression.

Le procédé selon l'invention présente notamment l'avantage d'améliorer de façon importante la robustesse aux erreurs du flux de paquets à en-têtes compressés sans entraîner d'augmentation de débit puisqu'il exploite les zones de bourrage déjà existantes au sein du flux et ne comportant aucune information utile.

**Revendications**

1. Procédé de transmission robuste d'un flux de données sous forme de paquets $P_i$ comprenant au moins un en-tête $H_i$ (302), ledit en-tête étant compressé (310) par l'intermédiaire d'une première étape de compression d'en-tête, lesdits paquets étant fragmentés en une succession de cellules (307,314), lesdites cellules (307,314) ayant une taille fixe identique, ladite fragmentation entraînant l'apparition d'une section de bourrage (311) dans la dernière desdites cellules (314), la place occupée par ladite section de bourrage (311) étant utilisée, au moins partiellement, pour insérer des données de redondance, ledit procédé étant tel que lesdites données de redondance ont pour fonction d'augmenter la robustesse aux erreurs de transmission dudit entête compressé et sont obtenues à partir de l'application d'un code correcteur sur un bloc de données utiles de longueur k constitué par la concaténation de tout ou partie de plusieurs en-têtes compressés (310), la section $R_j$, composée desdites données de redondance, ayant une longueur $r_j$ égale à celle de ladite section de bourrage (311).

2. Procédé selon la revendication 1 **caractérisé en ce que** le rendement dudit code correcteur est donné par le rapport $\dfrac{k}{k + r_j}$ où k est la longueur du bloc de données à encoder qui est composé de la concaténation des en-têtes compressés des paquets présents entre ladite section de bourrage (311) et la section de bourrage immédiatement précédente au sein dudit flux de données transmis.

3. Procédé selon la revendication 2 **caractérisé en ce que** le rendement dudit code correcteur est inférieur à un rendement maximum $\dfrac{k_{max}}{k_{max} + r_j}$ déterminé à partir d'une estimation du taux de paquets perdus au cours de la transmission et de la courbe de performance dudit code, la longueur k dudit bloc de données à encoder étant limitée à une valeur $k_{max}$ obtenue à partir dudit rendement maximum et de la longueur $r_j$ de ladite section de bourrage (311).

4. Procédé selon la revendication 1 **caractérisé en ce que** le rendement dudit code correcteur est fixé à une valeur constante $R_c$ et la dimension k dudit bloc de données utiles à encoder est obtenue par la relation $k = r_j \dfrac{R_c}{1 - R_c}$, ledit bloc de données utiles comprenant tout ou partie de l'ensemble des en-tê-

tes compressés $H_i$ des paquets $P_i$ présents dans ledit flux de paquets à transmettre avant ladite section de bourrage (311).

5. Procédé selon la revendication 4 **caractérisé en ce que** ladite première étape de compression d'en-tête met en oeuvre un encodage des champs dudit entête utilisant une fenêtre glissante de taille w et ledit bloc de données utiles comprend tout ou partie d'un sous-ensemble S de l'ensemble des en-têtes compressés $H_i$ des paquets $P_i$ présents avant ladite section de bourrage (311), ledit sous-ensemble S étant **caractérisé par le fait que** deux en-têtes consécutifs du sous-ensemble S sont séparés dans ledit flux de données à transmettre par au moins un nombre d'en-têtes égal à la longueur w de la fenêtre glissante du protocole de mise en oeuvre de l'étape de compression d'en-tête.

6. Procédé selon l'une des revendications 1 à 5 **caractérisé en ce que** ledit code correcteur est un code de Reed-Solomon systématique ou un code BCH ou un code de Reed-Muller, ledit code étant éventuellement raccourci et/ou poinçonné.

7. Procédé selon l'une des revendications précédentes **caractérisé en ce que** le protocole ROHC ou le protocole IPHC est utilisé pour la compression d'en-tête.

8. Procédé selon l'une des revendications précédentes **caractérisé en ce que** le protocole ATM ou le protocole MPEG-TS est utilisé pour ladite fragmentation des paquets à en-tête compressé.

9. Système de transmission robuste d'un flux de données de paquets à entêtes compressés comportant un émetteur et un récepteur, tel que ledit émetteur comporte des moyens pour exécuter toutes les étapes du procédé selon l'une des revendications 1 à 8.

**Patentansprüche**

1. Verfahren zum robusten Übertragen eines Datenstroms in Form von Paketen $P_i$, die wenigstens einen Header $H_i$ (302) umfassen, wobei der Header in einem ersten Header-Kompressionsschritt komprimiert (310) wird, wobei die Pakete in eine Folge von Zellen (307, 314) fragmentiert werden, wobei die Zellen (307, 314) eine identische feste Größe haben, wobei die Fragmentierung dazu führt, dass eine Padding-Sektion (311) in der letzten der Zellen (314) erscheint, wobei der von der Padding-Sektion (311) eingenommene Raum wenigstens teilweise zum Einführen von Redundanzdaten benutzt wird, wobei das Verfahren derart ist, dass der Zweck der Redundanzdaten darin besteht, die Robustheit des komprimierten Headers für Sendefehler zu erhöhen, wobei die Daten durch Anwenden eines Korrekturcode auf einen Nutzdatenblock der Länge k erhalten werden, gebildet durch eine Verkettung aller oder einiger aus einer Mehrzahl von komprimierten Headern (310), wobei die Länge $r_j$ der aus den Redundanzdaten zusammengesetzten Sektion $R_j$ gleich der der Padding-Sektion (311) ist.

2. Verfahren nach Anspruch 1, **dadurch gekennzeichnet, dass** sich der Betrag des Korrekturcode

$$\frac{k}{k+r_j}$$

durch das Verhältnis ergibt, wobei k die Länge des zu codierenden Datenblocks ist, der aus der Verkettung der komprimierten Header der Pakete zusammengesetzt ist, die sich zwischen der Padding-Sektion (311) und der Padding-Sektion unmittelbar davor in dem gesendeten Datenstrom befinden.

3. Verfahren nach Anspruch 2, **dadurch gekennzeichnet, dass** der Betrag des Korrekturcode kleiner ist als der maximale Betrag $\frac{k_{max}}{k_{max}+r_j}$, der auf der Basis einer Schätzung der Rate von im Laufe des Sendens verlorengegangenen Paketen und der Leistungskurve des Code ermittelt wird, wobei die Länge k des zu codierenden Datenblocks auf einen Wert $k_{max}$ begrenzt wird, der auf der Basis des maximalen Betrags und der Länge $r_j$ der Padding-Sektion (311) erhalten wird.

4. Verfahren nach Anspruch 1, **dadurch gekennzeichnet, dass** der Betrag des Korrekturcode auf einen konstanten Wert $R_c$ gesetzt wird und die Dimension k des zu codierenden Nutzdatenblocks durch die Beziehung $k = r_j \frac{R_c}{1-R_c}$ erhalten wird, wobei der Nutzdatenblock alle oder einige aus dem Satz von komprimierten Headern $H_i$ der Pakete $P_i$ umfasst, die in dem vor der Padding-Sektion (311) zu sendenden Paketstrom vorliegen.

5. Verfahren nach Anspruch 4, **dadurch gekennzeichnet, dass** der erste Header-Kompressionsschritt das Codieren der Felder des Headers mit einem Gleitfenster der Größe w implementiert und der Nutzdatenblock alle oder einige aus einem Teilsatz S des Satzes von komprimierten Headern $H_i$ der Pakete $P_i$ umfasst, die vor der Padding-Sektion (311) vorhanden waren, wobei der Teilsatz S **dadurch gekennzeichnet ist, dass** zwei aufeinander folgende Header des Teilsatzes S in dem zu sendenden Datenstrom um wenigstens eine Anzahl von Headern getrennt ist, die gleich der Länge w des Gleitfensters des Protokolls zum Implementieren des Header-Kompressionsschritts ist.

6. Verfahren nach einem der Ansprüche 1 bis 5, **dadurch gekennzeichnet, dass** der Korrekturcode ein systematischer Reed-Solomon-Code oder ein BCH-Code oder ein Reed-Muller-Code ist, wobei der Code eventuell verkürzt und/oder gestanzt wird.

7. Verfahren nach einem der vorherigen Ansprüche, **dadurch gekennzeichnet, dass** das ROHC-Protokoll oder das IPHC-Protokoll für die Header-Kompression benutzt wird.

8. Verfahren nach einem der vorherigen Ansprüche, **dadurch gekennzeichnet, dass** das ATM-Protokoll oder das MPEG-TS-Protokoll für die Fragmentierung der Pakete mit komprimiertem Header benutzt wird.

9. System zum robusten Senden eines Stroms von Datenpaketen mit komprimierten Headern, das einen Sender und einen Empfänger umfasst, so dass der Sender Mittel zum Ausführen aller Schritte des Verfahrens nach einem der Ansprüche 1 bis 8 umfasst.

**Claims**

1. A method for the robust transmission of a data stream in the form of packets $P_i$ comprising at least one header $H_i$ (302), said header being compressed (310) through a first header compression step, said packets being fragmented into a succession of cells (307, 314), said cells (307, 314) having an identical fixed size, said fragmentation leading to the appearance of a padding section (311) in the last of said cells (314), the space occupied by said padding section (311) being at least partially used to insert redundancy data, said method being such that the purpose of said redundancy data is to increase the robustness of said compressed header to transmission errors, which data is obtained by applying a correction code to a useful data block of length k made up of the concatenation of all or part of a plurality of compressed headers (310), with the length $r_j$ of the section $R_j$, which is made up of said redundancy data, being equal to that of said padding section (311).

2. The method according to claim 1, **characterised in that** the output of said $k$ correction code is provided by the ratio $\dfrac{k}{k+r_j}$, where k is the length of the data block to be coded that is made up of the concatenation of the compressed headers of the packets present between said padding section (311) and the padding section immediately before within said transmitted data stream.

3. The method according to claim 2, **characterised in that** the output of said correction code is less than the maximum output $\dfrac{k_{\max}}{k_{\max} + r_j}$ determined on the basis of an estimate of the rate of packets lost during transmission and the performance curve of said code, with the length k of said data block to be coded being limited to a value $k_{\max}$ obtained from said maximum output and the length $r_j$ of said padding section (311).

4. The method according to claim 1, **characterised in that** the output of said correction code is set to a constant value $R_c$ and the dimension k of said block of useful data to be coded is obtained by the relation $k = r_j \dfrac{R_c}{1 - R_c}$, said useful data block comprising all or part of the set of compressed headers $H_i$ of the packets $P_i$ present in said packet stream to be transmitted before said padding section (311).

5. The method according to claim 4, **characterised in that** said first header compression step implements coding of the fields of said header using a sliding window of size w and said block of useful data comprises all or part of a sub-set S of the set of compressed headers $H_i$ of the packets $P_i$ present before said padding section (311), said sub-set S being **characterised in that** two consecutive headers of said sub-set S are separated in said data stream to be transmitted by at least a number of headers that is equal to the length w of the sliding window of the protocol for implementing the header compression step.

6. The method according to any one of claims 1 to 5, **characterised in that** said correction code is a systematic Reed-Solomon code or a BCH code or a Reed-Muller code, said code possibly being shortened and/or punched.

7. The method according to any one of the preceding claims, **characterised in that** the ROHC protocol or the IPHC protocol is used for header compression.

8. The method according to any one of the preceding claims, **characterised in that** the ATM protocol or the MPEG-TS protocol is used for said fragmentation of the compressed header packets.

9. A system for the robust transmission of a stream of data packets with compressed headers comprising a transmitter and a receiver, such that said transmitter comprises means for executing all of the steps of the method according to any one of claims 1 to 8.

FIG.1

Application — 212
Encapsulation (ex RTP ) — 211
Transport (ex UDP ) — 210
Couche réseau (IP ) — 209
Décompression en-tête — 208
Accès radio : (couches liaison et Physique) — 207

Application (ex voix sur IP ) — 201
Encapsulation (ex RTP ) — 202
Transport (ex UDP ) — 203
Couche réseau (IP ) — 204
Compression en-tête — 205
Accès radio : (couches liaison et Physique) — 206

200 — Transmission sur le canal physique sans fil

FIG.2

FIG. 3

EP 2 406 929 B1

FIG.5

EP 2 406 929 B1

| H1 | H2 | H3 | R1 | H4 | H5 | R2 | H6 | H7 | R3 |

**FIG.6**

70

71

72

73

| H1 | H2 | H3 | R1 | H4 | H5 | R2 | H6 | H7 | R3 |

**FIG.7**

FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2907624

- JP 2004282197 A